# EUROPÄISCHE PATENTSCHRIFT

(11) **EP 3 885 070 B1**
(45) Veröffentlichungstag und Bekanntmachung des Hinweises auf die Patenterteilung: **14.05.2025**
(21) Anmeldenummer: 20020137.4
(22) Anmeldetag: 26.03.2020
(51) Int. Cl.: B23K 35/02, C22C 38/02, C22C 38/04, C22C 38/44, C22C 38/46, C22C 38/50, B23K 35/40, B23K 35/30

(54) **SCHWEISSGUT SOWIE METALLPULVERFÜLLDRAHT ZUR HERSTELLUNG EINES SCHWEISSGUTS**
WELDING MATERIAL AND METAL POWDER FILLING WIRE FOR PRODUCING A WELDING MATERIAL
MATIÈRE D'APPORT POUR LE SOUDAGE AINSI QUE FIL DE REMPLISSAGE DU POUDRE MÉTALLIQUE DESTINÉ À LA FABRICATION D'UNE MATIÈRE D'APPORT POUR LE SOUDAGE

(43) Veröffentlichungstag der Anmeldung: 29.09.2021
(73) Patentinhaber: Voestalpine Böhler Welding Austria GmbH, 8605 Kapfenberg (AT)
(72) Erfinder: Pahr, Hannes, A-8700 Leoben (AT)
(74) Vertreter: SONN Patentanwälte GmbH & Co KG

(56) Entgegenhaltungen:
- EP-A1- 2 848 355
- CN-A- 110 732 799

## Beschreibung

Die Erfindung betrifft ein Schweißgut sowie einen Metallpulverfülldraht umfassend ein Füllpulver und eine das Füllpulver umschließende Hülle zur Herstellung eines Schweißguts in einem Lichtbogenschweißverfahren.

Die EP 2 848 355 A1 bildet den allgemeinen Stand der Technik zum Gegenstand der vorliegenden Erfindung.

In industriellen Anwendungen sowie in der Fahrzeug- und Bauindustrie besteht ein Bedarf nach Gewichtsreduktion, sodass vermehrt verschiedene Leichtbauprinzipien, wie z.B. der konstruktive Leichtbau und der Werkstoffleichtbau, umgesetzt werden. Im konstruktiven Leichtbau wird versucht das Gewicht durch konstruktive Maßnahmen zu reduzieren, wobei insbesondere eine möglichst gleichmäßige Ausnutzung des Materialvolumens angestrebt wird. Der Werkstoffleichtbau beruht darauf, den ursprünglichen Werkstoff eines Bauteils durch einen anderen Werkstoff mit höheren spezifischen Eigenschaften auszutauschen. Hochfeste Stähle erlauben gegenüber konventionellen Stahlgüten meist geringere Wandstärken bei gleichen Bauteileigenschaften. Die Verwendung von Stählen höherer Festigkeit erlaubt es, die Dicke der Teile verringern zu können, ohne Sicherheits- und funktionelle Anforderungen aufzugeben. Hochfeste Stähle haben eine Streckgrenze Rₑ von mehr als 355 N/mm².

Um die Vorteile solcher hochfester Stähle bestmöglich ausnutzen zu können, ist es bei geschweißten Konstruktionen günstig, auch die Festigkeit der Schweißverbindung zu optimieren. Insbesondere erfordert das Schweißen von hochfesten Stählen die Verwendung eines geeigneten Schweißzusatzes. Der Schweißzusatz fließt beim Schweißen mit dem aufgeschmolzenen Grundwerkstoff zusammen und trägt dadurch zur Bildung der Schweißnaht bei. Der Schweißzusatz bestimmt maßgeblich die Eigenschaften der Schweißnaht, wie z.B. die Festigkeit und die Verformungsfähigkeit.

Beim Schweißen mit Fülldrahtelektroden können die mechanischen Gütewerte des Schweißgutes stark durch die Pulverfüllung beeinflusst werden. Bei Fülldrahtelektroden unterscheidet man nach der Art des Gasschutzes zwischen gasgeschützten Fülldrahtelektroden, die mit Schutzgas verschweißt werden, und selbstschützenden Fülldrahtelektroden, die durch den Lichtbogen ihr Schutzgas aus Elementen der Füllung selbst erzeugen. Bei den gasgeschützten Fülldrahtelektroden unterscheidet man zwischen Metallpulverfülldrähten und rutilen und/oder basischen schlackeführenden Fülldrahtelektroden.

Die Füllung der Metallpulverfülldrähte besteht im Wesentlichen aus Eisenpulver, Legierungselementen und lichtbogenstabilisierenden Elementen.

Metallpulverfülldrähte bilden keine Schlacke aus, sodass die Oberfläche der Schweißnaht schlackenfrei ist; in Abhängigkeit vom Schutzgas und dem Grundwerkstoff sind lediglich vereinzelte Silikat- und Oxidinseln an der Oberfläche der Schweißraupe möglich.

Die Erfindung zielt nun darauf ab, ein Schweißgut dahingehend zu verbessern, dass es die für die Verschweißung von hochfesten Stählen notwendige Mindeststreckgrenze und gleichzeitig eine hohe Kerbschlagarbeit aufweist.

Zur Lösung dieser Aufgabe sieht die Erfindung gemäß einem ersten Aspekt ein Schweißgut vor, welches eine chemische Zusammensetzung aufweist, wie in den Ansprüchen 1-3 definiert.

Die Erfindung beruht auf einer Untersuchung des Einflusses der Legierungselemente auf die mechanischen Eigenschaften des reinen Schweißgutes. Es konnte ein Legierungsdesign gefunden werden, mit welchem energieeffizientere Bauteile mit geringerem Gewicht und noch höherer Belastbarkeit konstruiert werden können.

Darüber hinaus wurde der Zusammenhang zwischen der Mikrostruktur und den resultierenden mechanischen Eigenschaften des gesamten Schweißguts eingehend untersucht. Es hat sich überraschend gezeigt, dass die Festigkeit durch eine Kombination von jeweils eng gewählten Mengenbereichen der einzelnen Legierungselemente signifikant höher ist als bei herkömmlichen Legierungszusammensetzungen. Insbesondere wurde gefunden, dass die Festigkeit bei der erfindungsgemäßen Legierungszusammensetzung durch einen relativ hohen Vanadiumgehalt von über 0,20 Gew.-% signifikant ansteigt. Insbesondere wurde eine Clusterbildung von Vanadium beobachtet, welche offenbar für den signifikanten Anstieg der Festigkeit verantwortlich ist. Bei Vanadiumgehalten von über 0,30 Gew.-% sinkt allerdings die Kerbschlagzähigkeit stark ab. Zusätzlich wurde gefunden, dass eine feine chaotische martensitische Mikrostruktur wünschenswert ist, um die erforderliche Zähigkeit zu erreichen.

Numerischen Simulationen zeigten eine angemessene Übereinstimmung mit den mechanischen Tests. Das erfindungsgemäße Legierungskonzept weist zusätzlich hervorragende Schweißeigenschaften hinsichtlich Tropfenablösung und Lichtbogenstabilität auf.

Außerdem haben Versuche mit Stumpfverbindungsschweißungen mit passendem, artgleichen Grundmaterial ergeben, dass die hohen Festigkeitswerte und Zähigkeitseigenschaften unter Anwendung unterschiedlicher Abkühlraten erzielt werden können. Insbesondere wurde festgestellt, dass die Abkühlraten mit t8/5-Zeiten zwischen 5 und 25 Sekunden variiert werden können, ohne die mechanischen Eigenschaften des Schweißguts wesentlich zu verändern. Die t8/5-Zeit gibt hierbei diejenige Zeit an, die während des Abkühlens einer Schweißraupe und ihrer Wärmeeinflusszone zum Durchlaufen des Temperaturbereichs von 800°C bis 500°C benötigt wird.

Bevorzugt ist ein Schweißgut mit der folgenden chemischen Zusammensetzung:
C: 0,080-0,090 Gew.-%
Mn: 1,40-1,50 Gew.-%
Si: 0,40-0,50 Gew.-%
Cr: 0,60-0,70 Gew.-%
Ni: 2,70-3,00 Gew.-%
Mo: 0,50-0,60 Gew.-%
V: 0,20-0,25 Gew.-%

sowie ggf. weitere Bestandteile, insbesondere:
   Co: ≤ 0,02 Gew.-%
   Ti: 0,007-0,018 Gew.-%
   Al: ≤ 0,007 Gew.-%,
Rest Eisen sowie unvermeidliche Verunreinigungen.

Hinsichtlich des Vanadiumgehalts ist bevorzugt vorgesehen, dass der obere Grenzwert von Vanadium 0,30 Gew.-% oder 0,29 Gew.-% oder 0,28 Gew.-% oder 0,27 Gew.-% beträgt.

Hinsichtlich des Vanadiumgehalts ist weiters bevorzugt vorgesehen, dass der untere Grenzwert von Vanadium 0,20 Gew.-% oder 0,21 Gew.-% oder 0,22 Gew.-% oder 0,23 Gew.-% oder 0,24 Gew.-% beträgt.

Im Rahmen der Erfindung sind somit die folgenden Bereiche für den Vanadiumgehalt möglich (Gew.-%):
0,20-0,30, 0,20-0,29, 0,20-0,28, 0,20-0,27,
0,21-0,30, 0,21-0,29, 0,21-0,28, 0,21-0,27,
0,22-0,30, 0,22-0,29, 0,22-0,28, 0,22-0,27,
0,23-0,30, 0,23-0,29, 0,23-0,28, 0,23-0,27,
0,24-0,30, 0,24-0,29, 0,24-0,28, 0,24-0,27.

Der Gehalt an weiteren Bestandteilen wird wie folgt begrenzt:
Nb: ≤ 0,002 Gew.-%
N: ≤ 0,05 Gew.-%
O: ≤ 0,05 Gew.-%
P: ≤ 0,012 Gew.-%
S: ≤ 0,010 Gew.-%
Cu: ≤ 0,3 Gew.-%

Bevorzugt ist vorgesehen, dass das Schweißgut eine Zugfestigkeit Rm von größer 1100 MPa, besonders bevorzugt größer 1150 MPa, aufweist (gemessen in einem Zugversuch nach DIN EN ISO 6892-1:2017-02).

Bevorzugt weist das Schweißgut eine Streckgrenze Rp0,2 von größer 1100 MPa auf. Die Streckgrenze Rp0,2 ist die 0,2-%-Dehngrenze, welche derjenigen einachsigen mechanischen Spannung entspricht, bei der die auf die Anfangslänge der Probe bezogene bleibende Dehnung nach Entlastung genau 0,2 % beträgt, gemessen in einem Zugversuch nach DIN EN ISO 6892-1:2017-02.

Weiters ist bevorzugt vorgesehen, dass das Schweißgut eine Kerbschlagarbeit bei +20°C von größer 35 J, besonders bevorzugt größer 40 J aufweist.

Bevorzugt ist vorgesehen, dass das Schweißgut eine Kerbschlagarbeit bei -20°C von größer 35 J, besonders bevorzugt größer 40 J aufweist.

Die Kerbschlagarbeit ist hierbei in einem Kerbschlagbiegeversuch gemäß DIN EN ISO 148-1 ermittelt.

Um sicherzustellen, dass sowohl die Zugfestigkeit als auch die Kerbschlagzähigkeit des Schweißguts entsprechende Mindestwerte überschreiten, ist bevorzugt vorgesehen, dass das Schweißgut ein Produkt aus Zugfestigkeit Rm und Kerbschlagarbeit von > 39500 MPa·J, bevorzugt > 50000 MPa·J aufweist.

Bevorzugt ist vorgesehen, dass das Schweißgut eine Bruchdehnung A5 von größer 10%, bevorzugt größer 12% aufweist. Dabei wird die Bruchdehnung in einem Zugversuch gemäß DIN EN ISO 6892-1:2017-02 ermittelt, wobei das Verhältnis der Anfangsmesslänge L₀ zum Anfangsdurchmesser d₀ der Probe 5 beträgt.

Bevorzugt weist das Schweißgut ein martensitisches Gefüge auf.

Gemäß einem zweiten Aspekt stellt die Erfindung einen Metallpulverfülldraht bereit, umfassend ein Füllpulver und eine das Füllpulver umschließende Hülle zur Herstellung eines Schweißguts in einem Lichtbogenschweißverfahren, wobei der Metallpulverfülldraht zur Ausbildung eines erfindungsgemäßen Schweißguts ausgebildet ist.

Bevorzugt ist vorgesehen, dass das Füllpulver Lichtbogenstabilisatoren aufweist, um die Schweißeigenschaften der Fülldrahtelektrode noch weiter zu verbessern.

Weiters ist bevorzugt vorgesehen, dass das Gewicht des Füllpulvers zwischen 10 und 30% des Gewichts der Fülldrahtelektrode ausmacht. Dieser Wert wird auch als Füllungsgrad bezeichnet.

Um einen sicheren Halt des Füllpulvers in der Hülle zu verwirklichen, ist bevorzugt vorgesehen, dass die Hülle von einem stumpfgestoßenen bzw. gefalzten oder verschweißten Band gebildet ist. Dadurch kann die Hülle einfach und effizient hergestellt werden, indem das Füllpulver in ein eingeformtes Band eingewogen und dieses anschließend verschlossen wird. Prinzipiell kann der Metallpulverfülldraht auf drei verschiedene Arten hergestellt werden: stumpfgestoßene bzw. gefalzte Herstellroute; formgeschlossene Herstellroute oder verschweißte Herstellroute (bspw. Laserschweißen oder Hochfrequenzschweißen). Beim forgmeschlossenen, diskontinuierlichen Herstellungsprozess wird das Pulver in ein bereits geschlossenes Rohr durch Rütteln eingebracht.

Die Erfindung wird nachfolgend anhand von Ausführungsbeispielen näher erläutert.

Die Erprobung der mechanisch-technologischen Eigenschaften des reinen Schweißgutes wurde gemäß EN ISO 15792-1 Ausgabe: 2019-11-15 durchgeführt. Der Metallpulverfülldraht kann einen Außendurchmesser von 0,9mm bis 2,4mm aufweisen. Folgende Schweißparameter wurden verwendet:
Schweißspannung: 23-29 V
Schweißdrahtvorschub: 7-10m/min

Der Metallpulverfülldraht wurde am Gleichstrom am Pluspol bei 24V Spannung unter Schutzgasatmosphäre verschweißt.

Es wurden die folgenden Materialeigenschaften des reinen Schweißgutes gemessen, d.h. ohne Einflüsse des Basismaterials z.B. in der Wärmeinflusszone. Die Messungen der chemischen Zusammensetzung wurden an einem Zylinder, welcher aus mehreren Lagen reinem Schweißgut hergestellt wird, durchgeführt.

Die chemische Analyse des reinen Schweißgutes wurde mittels Funkenspektrometer bestimmt und die hierdurch erhaltenen Daten wurden regelmäßig mit den nasschemischen Analysen eines zertifizierten Labors überprüft.

Die den Ausführungsbeispielen zugrunde liegenden Versuche wurden durchgeführt, um einen Metallpulverfülldraht zu erhalten, der nach der Verarbeitung im reinen Schweißgut eine Streckgrenze Rp0,2 von mindestens 1100 MPa, eine Bruchdehnung von mindestens 10% und gleichzeitig ausreichende Zähigkeitswerte aufweist, insbesondere eine hohe Kerbschlagarbeit von mindestens 35 J bei -20°C. Die geforderte Mindestkerbschlagarbeit von 35 J bei -20°C im reinen Schweißgut ist erforderlich, um auch in der Verbindung mit einem artgleichen hochfesten Grundwerkstoff mit einer Streckgrenze >1100 MPa eine Mindestkerbschlagarbeit von 27 J zu erreichen. Dies gilt für flüssigvergütete oder thermomechanisch gewalzte Stähle.

### Beispiele 1-4

In den Beispielen 1 bis 4 wurde ein Schweißgut mit den in Tabelle 1 angegebenen Legierungszusammensetzungen erhalten. Der Rest besteht aus Eisen sowie unvermeidlichen Verunreinigungen.

**Tabelle 1:**

| | **Bsp. 1** | **Bsp. 2** | **Bsp. 3** | **Bsp. 4** |
|---|---|---|---|---|
| C [Gew.-%] | 0,09 | 0,08 | 0,07 | 0,06 |
| Si [Gew.-%] | 0, 4 | 0,5 | 0,4 | 0,5 |
| Mn [Gew.-%] | 1,4 | 1,4 | 1,2 | 1,4 |
| Cr [Gew.-%] | 0,7 | 0,6 | 0,6 | 0,5 |
| Mo [Gew.-%] | 0,5 | 0,5 | 0,5 | 0,5 |
| Ni [Gew.-%] | 2,7 | 2,9 | 2, 2 | 2, 8 |
| Al [Gew.-%] | 0,006 | 0,005 | 0,005 | 0, 005 |
| Co [Gew.-%] | 0,007 | 0,008 | 0, 006 | 0,007 |
| Ti [Gew.-%] | 0, 01 | 0, 01 | 0, 01 | 0, 01 |
| V [Gew.-%] | 0,23 | 0,22 | 0,22 | 0,22 |
| Zugfestigkeit Rm [MPa] | 1197 | 1185 | 1062 | 1120 |
| Streckgrenze Rp0,2 [MPa] | 1135 | 1127 | 1024 | 1087 |
| Bruchdehnung A5 [%] | 14,2 | 12,3 | 10, 6 | 12,7 |
| Kerbschlagarbeit CV bei +20°C [J] | 58 | 57 | 51 | 54 |
| Kerbschlagarbeit CV bei -20°C [J] | 50 | 50 | 41 | 48 |
| Erfindungsgemäß | x | x | | |

In den Beispielen 1 und 2 lag der Gehalt der einzelnen Legierungselemente in den erfindungsgemäßen Bereichen:
C: 0,08-0,10 Gew.-%
Mn: 1,30-2,0 Gew.-%
Si: 0,35-0,60 Gew.-%
Cr: 0,60-0,80 Gew.-%
Ni: 2,50-3,00 Gew.-%
Mo: 0,30-0,80 Gew.-%
V: 0,20-0,30 Gew.-%
Co: ≤ 0,02 Gew.-%
Ti: 0,01-0,02 Gew.-%
Al: ≤ 0,010 Gew.-%,

Es ergab sich eine Zugfestigkeit Rm und eine Streckgrenze Rp0,2 von jeweils mindestens 1100 MPa. Weiters lag die Bruchdehnung über 10% und die Kerbschlagarbeit lag sowohl bei +20°C als auch bei -20°C über 35 J.

In Beispiel 3 wurde der Kohlenstoffgehalt, der Nickelgehalt und der Mangangehalt unter den jeweiligen erfindungsgemäßen Mengenbereich verringert. Dies resultierte in einer verringerten Zugfestigkeit Rm und einer verringerten Streckgrenze Rp0,2, die jeweils unter dem gesetzten Grenzwert von 1100 MPa lagen.

In Beispiel 4 wurde der Kohlenstoffgehalt und der Chromgehalt unter den jeweiligen erfindungsgemäßen Mengenbereich verringert. Dies resultierte in einer verringerten Streckgrenze Rp0,2, die unter dem gesetzten Grenzwert von 1100 MPa lag.

### Beispiele 5-8

In den Beispielen 5 bis 8 wurde ein Schweißgut mit den in Tabelle 2 angegebenen Legierungszusammensetzungen erhalten.

Die Beispiele unterscheiden sich lediglich im Vanadiumgehalt. Der Rest besteht aus Eisen sowie unvermeidlichen Verunreinigungen.

**Tabelle 2:**

| | Bsp. 5 | Bsp. 6 | Bsp. 7 | Bsp. 8 | Bsp. 9 |
|---|---|---|---|---|---|
| C [Gew.-%] | 0,08-0,09 | 0,08-0,09 | 0,08-0,09 | 0,08-0,09 | 0, 08-0, 09 |
| Si [Gew.-%] | 0,5 | 0,5 | 0,5 | 0,5 | 0,5 |
| Mn [Gew.-%] | 1,4 | 1,4 | 1,4 | 1,4 | 1,4 |
| Cr [Gew.-%] | 0, 7 | 0, 7 | 0, 7 | 0, 7 | 0, 7 |
| Mo [Gew.-%] | 0, 7 | 0, 7 | 0, 7 | 0, 7 | 0, 7 |
| Ni [Gew.-%] | 2,9-3,0 | 2,9-3,0 | 2,9-3,0 | 2,9-3,0 | 2,9-3,0 |
| Al [Gew.-%] | 0,006 | 0,006 | 0, 006 | 0, 006 | 0, 006 |
| Co [Gew.-%] | 0,007 | 0,007 | 0,007 | 0,007 | 0,007 |
| Ti [Gew.-%] | 0, 01 | 0, 01 | 0, 01 | 0, 01 | 0,01 |
| V [Gew.-%] | 0, 18 | 0,20 | 0,25 | 0,28 | 0,33 |
| Erfindungsgemäß | | x | x | x | |

Bei den Beispielen 6, 7 und 8 liegt der V-Gehalt im erfindungsgemäßen Bereich von 0,20-0,30 Gew.-%. Bei den anderen Beispielen liegt der V-Gehalt entweder unter dem erfindungsgemäßen Bereich (Bespiel 1) oder darüber (Beispiele 8 und 9).

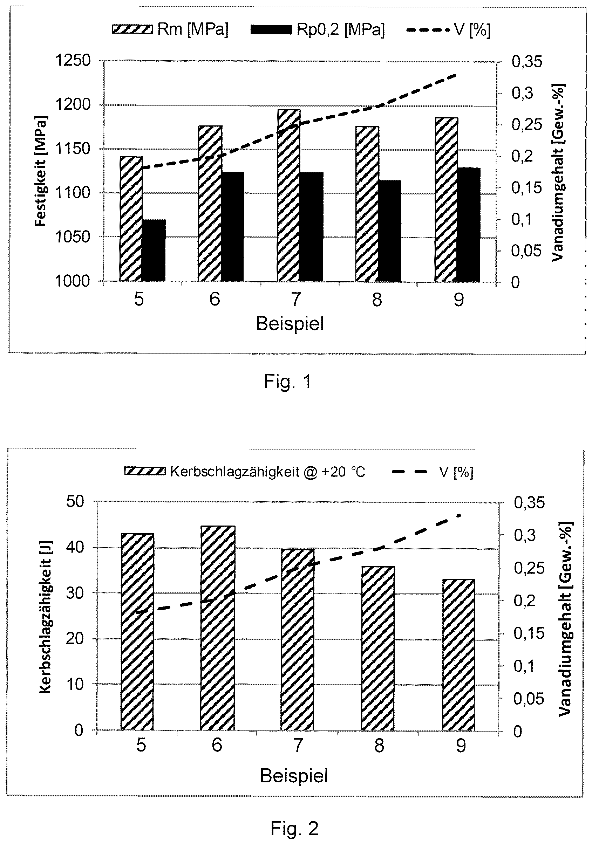

Die Messergebnisse für die Zugfestigkeit Rm und die Streckgrenze Rp0,2 in Abhängigkeit vom Vanadiumgehalt sind in Fig. 1 dargestellt. Fig. 2 zeigt die Kerbschlagzähigkeit in Abhängigkeit vom Vanadiumgehalt.

Fig. 1 zeigt, dass die Streckgrenze Rp0,2 bei einem Vanadiumgehalt von 0,20 oder höher den Mindestwert von 1100 MPa übersteigt. Allerdings liegt die Kerbschlagzähigkeit bei einem Vanadiumgehalt von 0,33 Gew.- % (Beispiel 9) nicht mehr über dem Mindestwert von 35 J und ist insbesondere nicht hoch genug, um in der Verbindung mit einem artgleichen Grundwerkstoff eine Mindestkerbschlagarbeit von 27 J zu erreichen (siehe Fig. 2). Deshalb erfüllen lediglich die Beispiele 6, 7 und 8 alle Vorgaben und gelten daher als erfindungsgemäße Ausführungsformen.

## Patentansprüche

1. Schweißgut, welches die folgende chemische Zusammensetzung aufweist:
C: 0,08-0,10 Gew.-%
Mn: 1,30-2,00 Gew.-%
Si: 0,35-0,60 Gew.-%
Cr: 0,60-0,80 Gew.-%
Ni: 2,50-3,00 Gew.-%
Mo: 0,30-0,80 Gew.-%
V: 0,20-0,30 Gew.-%
sowie ggf. weitere Bestandteile:
Co: ≤ 0,02 Gew.-%
Ti: 0,01-0,02 Gew.-%
Al: ≤ 0,010 Gew.-%,
wobei der Gehalt an optionalen weiteren Bestandteilen wie folgt begrenzt ist:
Nb: ≤ 0,002 Gew.-%
N: ≤ 0,05 Gew.-%
O: ≤ 0,05 Gew.-%
P: ≤ 0,012 Gew.-%
S: ≤ 0,010 Gew.-%
Cu: ≤ 0,3 Gew.-%
Rest Eisen sowie unvermeidliche Verunreinigungen.

2. Schweißgut nach Anspruch 1, welches die folgende chemische Zusammensetzung aufweist:
C: 0,080-0,095 Gew.-%
Mn: 1,40-1,50 Gew.-%
Si: 0,35-0,55 Gew.-%
Cr: 0,60-0,80 Gew.-%
Ni: 2,50-3,00 Gew.-%
Mo: 0,30-0,60 Gew.-%
V: 0,20-0,25 Gew.-%
sowie ggf. weitere Bestandteile, insbesondere:
Co: ≤ 0,02 Gew.-%
Ti: 0,007-0,018 Gew.-%
Al: ≤ 0,007 Gew.-%,
Rest Eisen sowie unvermeidliche Verunreinigungen.

3. Schweißgut, nach einem der vorhergehenden Ansprüche, welches die folgende chemische Zusammensetzung aufweist:
C: 0,080-0,090 Gew.-%
Mn: 1,40-1,50 Gew.-%
Si: 0,40-0,50 Gew.-%
Cr: 0,60-0,70 Gew.-%
Ni: 2,70-3,00 Gew.-%
Mo: 0,50-0,60 Gew.-%
V: 0,20-0,30 Gew.-%, bevorzugt 0,20-0,25 Gew.-%
sowie ggf. weitere Bestandteile, insbesondere:
Co: ≤ 0,02 Gew.-%
Ti: 0,007-0,018 Gew.-%
Al: ≤ 0,007 Gew.-%,
Rest Eisen sowie unvermeidliche Verunreinigungen.

4. Schweißgut nach einem der vorhergehenden Ansprüche, **dadurch gekennzeichnet, dass** der obere Grenzwert von Vanadium 0,30 Gew.-% oder 0,29 Gew.-% oder 0,28 Gew.-% oder 0,27 Gew.-% beträgt.

5. Schweißgut nach einem der vorhergehenden Ansprüche, **dadurch gekennzeichnet, dass** der untere Grenzwert von Vanadium 0,20 Gew.-% oder 0,21 Gew.-% oder 0,22 Gew.-% oder 0,23 Gew.-% oder 0,24 Gew.-% beträgt.

6. Schweißgut nach einem der Ansprüche 1 bis 5, **dadurch gekennzeichnet, dass** das Schweißgut eine Zugfestigkeit Rm von größer 1100 MPa, bevorzugt größer 1150 MPa aufweist, wobei die Zugfestigkeit in einem Zugversuch gemäß DIN EN ISO 6892-1:2017-02 gemessen ist.

7. Schweißgut nach einem der Ansprüche 1 bis 6, **dadurch gekennzeichnet, dass** das Schweißgut eine Streckgrenze Rp0,2 von größer 1100 MPa aufweist, wobei die Streckgrenze in einem Zugversuch gemäß DIN EN ISO 6892-1:2017-02 gemessen ist.

8. Schweißgut nach einem der Ansprüche 1 bis 7, **dadurch gekennzeichnet, dass** das Schweißgut eine Kerbschlagarbeit bei +20°C von größer 35 J, bevorzugt größer 40 J aufweist, wobei die Kerbschlagarbeit in einem Kerbschlagbiegeversuch gemäß DIN EN ISO 148-1 ermittelt ist.

9. Schweißgut nach einem der Ansprüche 1 bis 8, **dadurch gekennzeichnet, dass** das Schweißgut eine Kerbschlagarbeit bei -20°C von größer 35 J, bevorzugt größer 40 J aufweist, wobei die Kerbschlagarbeit in einem Kerbschlagbiegeversuch gemäß DIN EN ISO 148-1 ermittelt ist.

10. Schweißgut nach einem der vorhergehenden Ansprüche, **dadurch gekennzeichnet, dass** das Schweißgut ein Produkt aus Zugfestigkeit Rm und Kerbschlagarbeit von > 39500 MPa·J, bevorzugt > 50000 MPa·J aufweist.

11. Schweißgut nach einem der Ansprüche 1 bis 10, **dadurch gekennzeichnet, dass** das Schweißgut eine Bruchdehnung A5 von größer 10%, bevorzugt größer 12% aufweist, wobei die Bruchdehnung in einem Zugversuch gemäß DIN EN 6892-1:2017-02 ermittelt ist, wobei das Verhältnis der Anfangsmesslänge L₀ zu Anfangsduchmesser d₀ der Probe 5 beträgt.

12. Metallpulverfülldraht umfassend ein Füllpulver und eine das Füllpulver umschließende Hülle zur Herstellung eines Schweißguts in einem Lichtbogenschweißverfahren, **dadurch gekennzeichnet, dass** der Metallpulverfülldraht zur Ausbildung eines Schweißguts nach einem der Ansprüche 1 bis 11 ausgebildet **ist.**

13. Metallpulverfülldraht nach Anspruch **12, dadurch gekennzeichnet, dass** das Füllpulver Lichtbogenstabilisatoren enthält.

14. Metallpulverfülldraht nach Anspruch 12 oder **13, dadurch gekennzeichnet, dass** das Gewicht des Füllpulvers zwischen 10 und 30% des Gewichts des Metallpulverfülldrahtes ausmacht.

## Claims

1. A weld metal deposit having the following chemical composition:
C: 0.08-0.10 wt%
Mn: 1.30-2.00 wt%
Si: 0.35-0.60 wt%
Cr: 0.60-0.80 wt%
Ni: 2.50-3.00 wt%
Mo: 0.30-0.80 wt%
V: 0.20-0.30 wt%
and optionally further components:
Co: ≤ 0.02 wt%
Ti: 0.01-0.02 wt%
Al: ≤ 0.010 wt%,
wherein the content of further optional components are limited as follows:
Nb: ≤ 0.002 wt%
N: ≤ 0.05 wt%
O: ≤ 0.05 wt%
P: ≤ 0.012 wt%
S: ≤ 0.010 wt%
Cu: ≤ 0.3 wt%
Balance: iron as well as unavoidable impurities.

2. A weld metal deposit according to claim 1, having the following chemical composition:
C: 0.080-0.095 wt%
Mn: 1.40-1.50 wt%
Si: 0.35-0.55 wt%
Cr: 0.60-0.80 wt%
Ni: 2.50-3.00 wt%
Mo: 0.30-0.60 wt%
V: 0.20-0.25 wt%
and optionally further components, in particular:
Co: ≤ 0.02 wt%
Ti: 0.007-0.018 wt%
Al: ≤ 0.007 wt%,
Balance: iron as well as unavoidable impurities.

3. A weld metal deposit according to any one of the preceding claims, having the following chemical composition:
C: 0.080-0.090 wt%
Mn: 1.40-1.50 wt%
Si: 0.40-0.50 wt%
Cr: 0.60-0.70 wt%
Ni: 2.70-3.00 wt%
Mo: 0.50-0.60 wt%
V: 0.20-0.30 wt%, preferably 0.20-0.25 wt%
and optionally further components, in particular:
Co: ≤ 0.02 wt%
Ti: 0.007-0.018 wt%
Al: ≤ 0.007 wt%,
Balance: iron as well as unavoidable impurities.

4. Weld metal deposit according to any one of the preceding claims, **characterized in that** the upper limit of vanadium is 0.30 wt% or 0.29 wt% or 0.28 wt% or 0.27 wt%.

5. Weld metal deposit according to any one of the preceding claims, **characterized in that** the lower limit of vanadium is 0.20 wt% or 0.21 wt% or 0.22 wt% or 0.23 wt% or 0.24 wt%.

6. Weld metal deposit according to any one of claims 1 to 5, **characterized in that** the weld metal deposit has a tensile strength Rm of greater than 1100 MPa, preferably greater than 1150 MPa, wherein the tensile strength is measured by a tensile test according to DIN EN ISO 6892-1:2017-02.

7. Weld metal deposit according to any one of claims 1 to 6, **characterized in that** the weld metal deposit has an offset yield strength Rp0.2 of greater than 1100 MPa, wherein the offset yield strength is measured in a tensile test according to DIN EN ISO6892-1:2017-02.

8. Weld metal deposit according to any one of claims 1 to 7, **characterized in that** the weld metal deposit has an absorbed impact energy of greater than 35 J, preferably greater than 40 J, at +20°C, wherein the absorbed impact energy is determined by an impact test according to DIN EN ISO 148-1.

9. Weld metal deposit according to any one of claims 1 to 8, **characterized in that** the weld metal deposit has an absorbed impact energy of greater than 35 J, preferably greater than 40 J, at -20°C, wherein the absorbed impact energy is determined by an impact test according to DIN EN ISO 148-1.

10. Weld metal deposit according to any one of the preceding claims, **characterized in that** the weld metal deposit has a product of tensile strength Rm and absorbed impact energy of > 39500 MPa·J, preferably > 50000 MPa·J.

11. A weld metal deposit according to any one of claims 1 to 10, **characterized in that** the weld metal deposit has an elongation at break A5 of more than 10%, preferably more than 12%, wherein the elongation at break is determined in a tensile test according to DIN EN 6892-1:2017-02, wherein the ratio of the initial gauge length L₀ to the initial diameter d₀ of the sample is 5.

12. Metal powder cored welding wire comprising a filler powder and a sheath enclosing the filler powder for the production of a weld metal deposit in an arc welding process, **characterized in that** the metal powder cored welding wire is designed to form a weld metal deposit according to any one of claims 1 to 11.

13. Metal powder cored welding wire according to claim 12, **characterized in that** the filler powder contains arc stabilizers.

14. Metal powder cored welding wire according to claim 12 or 13, **characterized in that** the weight of the filler powder makes up between 10 and 30% of the weight of the metal powder cored welding wire.

## Revendications

1. Produit de soudage, qui présente la composition chimique suivante:
C: 0,08-0,10 % en poids
Mn: 1,30-2,00 % en poids
Si: 0,35-0,60 % en poids
Cr: 0,60-0,80 % en poids
Ni: 2,50-3,00 % en poids
Mo: 0,30-0,80 % en poids
V : 0,20-0,30 % en poids
ainsi que d'éventuels autres composants:
Co: ≤ 0,02 % en poids
Ti: 0,01-0,02 % en poids
Al: ≤ 0,010 % en poids,
la teneur en autres composants facultatifs étant limitée comme suit:
Nb: ≤ 0,002 % en poids
N: ≤ 0,05 % en poids
O: ≤ 0,05 % en poids
P: ≤ 0,012 % en poids
S: ≤ 0,010 % en poids
Cu: ≤ 0,3 % en poids
le reste étant du fer ainsi que des impuretés inévitables.

2. Produit de soudage selon la revendication 1, qui présente la composition chimique suivante:
C: 0,080-0,095 % en poids
Mn: 1,40-1,50 % en poids
Si: 0,35-0,55 % en poids
Cr: 0,60-0,80 % en poids
Ni: 2,50-3,00 % en poids
Mo: 0,30-0,60 % en poids
V: 0,20-0,25 % en poids
ainsi que d'éventuels autres composants, en particulier:
Co: ≤ 0,02 % en poids
Ti: 0,007-0,018 % en poids
Al: ≤ 0,007 % en poids,
le reste étant du fer ainsi que des impuretés inévitables.

3. Produit de soudage, selon l'une des revendications précédentes, qui présente la composition chimique suivante:
C: 0,080-0,090 % en poids
Mn: 1,40-1,50 % en poids
Si: 0,40-0,50 % en poids
Cr: 0,60-0,70 % en poids
Ni: 2,70-3,00 % en poids
Mo: 0,50-0,60 % en poids
V: 0,20-0,30 % en poids, de préférence 0,20-0,25 % en poids
ainsi que d'éventuels autres composants, en particulier:
Co: ≤ 0,02 % en poids
Ti: 0,007-0,018 % en poids
Al: ≤ 0,007 % en poids,
le reste étant du fer et des impuretés inévitables.

4. Produit de soudage selon l'une des revendications précédentes, **caractérisé en ce que** la valeur limite supérieure de vanadium est de 0,30 % en poids ou de 0,29 % en poids ou de 0,28 % en poids ou de 0,27 % en poids.

5. Produit de soudage selon l'une des revendications précédentes, **caractérisé en ce que** la valeur limite inférieure de vanadium est de 0,20 % en poids ou de 0,21 % en poids ou de 0,22 % en poids ou de 0,23 % en poids ou de 0,24 % en poids.

6. Produit de soudage selon l'une des revendications 1 à 5, **caractérisé en ce que** le produit de soudage présente une résistance à la traction Rm supérieure à 1100 MPa, de préférence supérieure à 1150 Mpa, la résistance à la traction étant mesurée lors d'un essai de traction selon la norme DIN EN ISO 6892-1:2017-02.

7. Produit de soudage selon l'une des revendications 1 à 6, **caractérisé en ce que** le produit de soudage présente une limite d'élasticité Rp0,2 supérieure à 1100 MPa, la limite d'élasticité étant un essai de traction selon la norme DIN EN ISO 6892-1:2017-02.

8. Produit de soudage selon l'une des revendications 1 à 7, **caractérisé en ce que** le produit soudé présente un travail de choc entaillé à +20 °C supérieure à 35 J, de préférence supérieure à 40 J, le travail de choc entaillé étant déterminée par un essai de flexion de choc sur éprouvette entaillée selon la norme DIN EN ISO 148-1.

9. Produit de soudage selon l'une des revendications 1 à 7, **caractérisé en ce que** le produit soudé présente un travail de choc entaillé à +20 °C supérieure à 35 J, de préférence supérieure à 40 J, le travail de choc entaillé étant déterminée par un essai de flexion de choc sur éprouvette entaillée selon la norme DIN EN ISO 148-1.

10. Produit de soudage selon l'une des revendications précédentes, **caractérisé en ce que** le produit de soudage présente un produit de la résistance à la traction Rm et de du travail de choc entaillé supérieur > 39500 MPa·J, de préférence > 50000 MPa·J.

11. Produit de soudage selon l'une des revendications 1 à 10, **caractérisé en ce que** le produit de soudage présente une allongation à la rupture A5 supérieur à 10 %, de préférence supérieur à 12 %, l'allongation à la rupture étant déterminé par un essai de traction selon la norme DIN EN 6892-1:2017-02, le rapport entre la longueur initiale L₀ et le diamètre initial d₀ de l'échantillon étant de 5.

12. Fil fourré en poudre métallique comprenant une poudre de remplissage et une gaine entourant la poudre de remplissage pour la fabrication d'un produit de soudage dans un procédé de soudage à l'arc, **caractérisé en ce que** le fil fourré de poudre métallique est conçu pour former un produit de soudage selon l'une des revendications 1 à 11.

13. Fil fourré en poudre métallique selon la revendication 12, **caractérisé en ce que** la poudre de remplissage contient des stabilisateurs d'arc.

14. Fil fourré en poudre métallique selon la revendication 12 ou 13, **caractérisé en ce que** le poids de la poudre de remplissage représente entre 10 et 30 % du poids du Fil fourré en poudre métallique.
